# EUROPÄISCHE PATENTANMELDUNG

(11) **EP 0 542 162 A1**
(43) Veröffentlichungstag der Anmeldung: **19.05.1993**
(21) Anmeldenummer: 92119099.7
(22) Anmeldetag: 07.11.1992
(51) Int. Cl.: C02F 1/04, C05F 7/00

(54) **Verfahren zur Entsorgung von Abwasser**

(30) Priorität: 15.11.1991 DE 4137554
(71) Anmelder: Schwarzmann, Günther, CH-6045 Meggen (CH); Schröder, Jürgen, Dr., CH-6018 Buttisholz (DE)
(72) Erfinder: Schwarzmann, Günther, CH-6045 Meggen (CH); Schröder, Jürgen, Dr., CH-6018 Buttisholz (DE)
(74) Vertreter: Jönsson, Hans-Peter, Dr.Dipl.-Chem.

(57) **Zusammenfassung**

Bei dem Verfahren gemäß der vorliegenden Erfindung wird das Abwasser im Kreislauf über im Freien stehende Körper mit großer Oberfläche gepumpft und bis zur Grenze der Fließfähigkeit aufkonzentriert.

Das eingedickte Abwasser, in dem die abzubauenden Stoffe angereichert sind, wird dann in einem weiteren Schritt auf ein geeignetes saugfähiges und vorzugsweise biologisch abbaubares Substrat gegeben, welches anschließend der Kompostierung einschließlich der Abfallstoffe unterworfen wird.

## Beschreibung

Die Erfindung betrifft ein Verfahren zur Entsorgung von Abwasser, das wässrige oder wasserhaltige Lösungen, Dispersionen oder Emulsionen kompostierfähiger Abfallstoffe enthält.

Auf dem Gebiet der biologischen Abwasserreinigung hat man erkannt, daß der biologische Abbau der verschiedenen Inhaltsstoffe dadurch zu optimieren ist, daß man den lebenden Abbau-Organismen ein gleichmäßig zusammengesetztes, jedoch möglichst vielfältiges Nahrungsangebot bietet. Dies kann durch Mischen von Abwässern unterschiedlichster Herkunft, aus chemischer oder lebensmitteltechnischer Produktion mit normalen Haushaltsabwässern aus Siedlungen erreicht werden. Der gemeinsame Abbau aller Abwasserinhaltsstoffe findet dann in einer biologischen Kläranlage statt.

Die Abbauleistung selbst großer, optimierter und automatisierter Kläranlagen bleibt jedoch begrenzt, da große Flüssigkeitsmengen in den Anlagen verarbeitet werden müssen und die mittlere Verweilzeit sehr kurz ist. Eine Verlängerung der Verweilzeit durch Vergrößerung der Nutzinhalte der Klärbecken stößt dabei sehr schnell an ökonomische Grenzen.

Man bemüht sich daher, diesen Fakten dadurch Rechnung zu tragen und im privaten Haushaltbereich möglichst nur noch Stoffe zu verwenden, welche in Schnelltests eine bestimmte Mindestabbaugeschwindigkeit nicht unterschreiten. Um so problematischer werden damit jedoch die Abwasserprobleme von Betrieben, deren Produkte und damit auch deren Abwasser nicht bezüglich einer besonders schnellen Abbaubarkeit optimiert werden können. Beispielhaft für derartige Betriebe seien Textilfärbereien genannt. Diesen Betrieben bleibt häufig nur der sehr kostenintensive Weg einer speziellen chemischen Abwasserentsorgung, z.B. durch Hochtemperaturverbrennung des gesamten Abwassers oder der Naßoxidation.

Der Ausbau von Kläranlagen hat zwar in den letzten Jahren erhebliche Fortschritte gemacht, konnte jedoch sehr häufig gerade in ländlichen Gebieten mit dem starken Wachstum der Siedlungen nicht Schritt halten. Dadurch sind viele Kläranlagen in diesen Gebieten oftmals überlastet. Mitunter wurden Einleitungsverbote, auch für Gewerbebetriebe, ausgesprochen, wenn die gewerbliche Schmutzfracht unter den Bedingungen der Kläranlage leicht abbaubar ist, wie z.B. bei Molkereien, Wäschereien usw. Der diesen Betrieben empfohlene Bau eigener herkömmlicher Kläranlagen ist zu akzeptablen Kosten nicht zu realisieren und außerdem ökologisch unsinnig.

Aus Ullmanns Encyclopädie der technischen Chemie, 4. Aufl. Bd. 6, 1981 S. 321 ff, insbesondere 450 ist zwar das Eindampfen und Aufkonzentrieren von Abwasser für spezielle Anwendungen bekannt, jedoch wird hier lediglich die sehr energieaufwendige Verdampfung des Wassers beschrieben.

Die Kosten für die herkömmliche Entsorgung werden nicht ausschließlich nach dem Volumen des Abwassers, sondern vornehmlich nach Art und Menge der Inhaltsstoffe berechnet. Hierbei ist von wesentlicher Bedeutung der chemische Sauerstoffbedarf (CSB-Wert) des zu behandelnden Abwassers.

Somit besteht ein dringender Bedarf für ein kostengünstiges Aufbereitungsverfahren, insbesondere für kleinere Abwassermengen, wobei die Abwasserinhaltsstoffe auch langsam abbaubar und damit für den Abbau in herkömmlichen Kläranlagen ungeeignet sein können.

Die vorstehend genannte Aufgabe kann gelöst werden durch ein Verfahren zur Entsorgung von Abwasser enthaltend wäßrige oder wasserhaltige Lösungen, Dispersionen oder Emulsionen kompostierfähiger Abfallstoffe durch
a) Überleiten des Abwassers über Oberflächen fester Stoffe, die sich im Freien befinden und Einblasen von Luft im Gegenstromprinzip unter Erhöhung der Viskosität bis zur Grenze der Fließfähigkeit,
b) Aufbringen des viskosen Abwassers auf ein saugfähiges kompostierbares Substrat und anschließendes
c) Kompostieren des Substrats und der Abfallstoffe.

Geeignet im Sinne der vorliegenden Erfindung sind im weitesten Sinne Abwasser, die einen mehr oder weniger großen Anteil an Wasser enthalten, der gemäß der vorliegenden Erfindung mit möglichst geringem Energieaufwand weitgehend verdampft wird.

Beispielhaft sei die Produktion von Desinfektionsmitteln näher betrachtet. Bei Desinfektionsmitteln für den Einsatz in Krankenhäusern und Industriebetrieben gehören heute die quarternären Amoniumsalze mit zu den bevorzugten Wirkstoffen. Bei der Produktion derartiger Produkte fallen üblicherweise erhebliche Mengen von Spülwässern mit mehr oder weniger hohen Gehalten an quaternären Amoniumverbindungen, beispielsweise Benzalkoniumchlorid an.
P. Kunz und G. Frietsch, Mikrobizide Stoffe in biologischen Kläranlagen, Springer Verlag 1986, bewerten diesen Wirkstoff für Kläranlagen wie folgt:
"Das Benzalkoniumchlorid BDMDAC wirkt ab 0,2 mg/l hemmend auf Algen. Ein Handelsprodukt auf der Basis von Benzalkoniumchlorid (10 %) wirkt auf die Kriechbewegung der Blaualge Phormidium nach 3 Stunden Einwirkungszeit in einer Konzentration von 1 µg/l hemmend, bei 0,1 µg/l noch zu 52 % (Benecke, Zullei 1977). Abbautests (Closed Bottle Test, modifizierter OECD-Screening-Test) zeigen für Benzalkon A (Benzalkoniumchlorid mit ca. 50 % C12-Alkylresten) eine starke Hemmung der biologischen Abbaubarkeit in nicht adaptierten Systemen; erst nach ausreichender Voradaption werden gute Abbauergebnisse - gemessen als biologischer Sauerstoffbedarf - erzielt; der Nachweis einer "ultimate biodegradation" wurde für derartige quarternäre Amoniumverbindungen noch nicht erbracht."

Somit können in dem Ablauf von Kläranlagen, welche mit größeren Mengen von Benzalkoniumchlorid aus der Desinfektionsmittelproduktion belastet werden, Restkonzentrationen auftreten, die auf die Fauna und Flora des Vorfluters toxisch wirken. Die Konsequenz des Kläranlagenbetreibers ist üblicherweise ein Einleitungsverbot für Benzalkoniumchlorid-haltige Abwasser. In diesem Falle sind auch bisher bekannte Entsorgungsverfahren wie Naßoxidation der Abwasserinhaltsstoffe oder die Verbrennung des gesamten Abwassers sehr kostenaufwendig.

Neben den oben genannten Desinfektionsmitteln läßt sich das erfindungsgemäße Verfahren auch auf eine Reihe weiterer, praktisch unbegrenzter Zahl von Abwässern anwenden, insbesondere aus Textilfärbereien, Gerbereien (nach Entfernung von Schwermetallen), aus der kosmetischen Industrie, aus Lack- und Farbenfabriken, aus der Produktion von Bauhilfsstoffen usw.

Erfindungsgemäß wird das Abwasser bis zur Grenze der Fließfähigkeit aufkonzentriert. Dies geschieht in besonders kostengünstiger Weise dadurch, daß das Abwasser im Kreislauf über im Freien stehende Körper mit großer Oberfläche gepumpt wird. Die so eingesetzten Oberflächen befinden sich demnach nicht in geschlossenen Räumen. Diese Körper können in verschiedener Art gestaltet werden, wie z.B. analog den in Kurorten anzutreffenden "Granierwerken", in denen salzhaltiges Wasser über lockere Schüttwände aus verrieselt wird und dabei verdunstet. Füllkörper in Füllkörperkolonnen, welche oben offen sind und durch die im Gegenstrom Luft hindurchgeblasen wird, können ebenfalls eingesetzt werden. In einer bevorzugten Ausführungsform der vorliegenden Erfindung verwendet man Füllkörper in der Kolonne aus Quarz, Sand, Kohle, Aktivkohle, Steinbrocken, Glasscherben, Aluminiumoxiden, Raschig-Ringen, Drahtspiralen, Maschendrahtringen und/oder Gitterfüllkörper.

Für den Fall, daß beispielsweise warme Abluft vorhanden ist, kann die darin enthaltende Wärmeenergie zur Verdunstung des Abwassers verwendet werden. Dazu wird das Abwasser über eine Füllkörperkolonne geleitet, wobei die warme Abluft vom Boden der Kolonne eingeblasen wird. Die Strömungsgeschwindigkeit der Luft sollte dabei so gewählt werden, daß keine Tröpfchen mitgerissen und als Aerosol ausgetragen werden. Lediglich eine Verdunstung des Wassers soll möglich sein.

Für den Fall, daß sich mit dem verdunstenden Wasser bereits gewisse Abwasserinhaltsstoffe ohne Abbau verflüchtigen, kann die wasserdampfgesättigte Luft problemlos durch eine lockere Schüttung geleitet werden, um diese Aerosole zurückzuhalten. Oberhalb der Füllkörper wird daher vorzugsweise organisches, zur Adsorption befähigtes und kompostierfähiges Material, beispielsweise Rindenschnitzel locker aufgeschichtet, damit flüchtige Geruchsträger aus der mit Wasserdampf gesättigten Abluft herausgenommen werden. In gleicher Weise ist auch eine Adsorption an Aktivkohle geeignet.

Das Abwasser wird kontinuierlich oder im Chargenbetrieb im Kreislauf über die Verdunstungsanlage geführt, bis der gewünschte Eindunstungsgrad erreicht ist. Die chargenweise Führung des Eindustungsverfahrens hat den Vorteil, daß bis zu einem gewünschten Eindunstungsgrad gearbeitet werden kann, während ein kontinuierliches Verfahren permanent mit einer gleichbleibend hohen Viskosität arbeitet. Durch Verwendung mehrerer, hintereinandergeschalteter Füllkörperkolonnen lassen sich gegebenenfalls die Vorteile von Chargenbetrieb und kontinuierlichem Betrieb miteinander kombinieren.

Das so erhaltene Konzentrat, in dem die abzubauenden Stoffe angereichert sind, wird dann in einem weiteren Verfahrensschritt auf ein geeignetes, saugfähiges und vorzugsweise biologisch abbaubares Substrat gegeben. Als Substrat dienen insbesondere organische Abfallprodukte, die problemlos kompostiert werden können, wie Rindenschnitzel, Häcksel, Stroh und Grünabfälle. Beispielsweise wird das Konzentrat auf dem separaten Kompostplatz zu Rindenschnitzeln gegeben, wobei das Mengenverhältnis zwischen Abwasserkonzentrat und den Rindenschnitzeln so gewählt wird, daß der Wasseranteil im Abwasserkonzentrat von den Rindenschnitzeln möglichst vollständig aufgesaugt wird. Diese Rindenschnitzel werden nun in lockeren Mieten aufgesetzt, so daß die Kompostierung problemlos verläuft. Die Abwasserinhaltsstoffe liegen dabei in viel konzentrierterer Form vor, als das in herkömnmlichen Abwasserreinigungsanlagen möglich ist. Der Abbau der Abwasserinhaltsstoffe ist dennoch ungleich stärker als in einer üblichen Kläranlage, da die Verweilzeit hier erheblich länger ist. Ebenso erhöht sich die Temperatur durch den biologischen Abbau, wobei die Stoffwechselgeschwindigkeit der abbauenden Mikroorganismen im Vergleich zu üblichen Kläranlagen größer ist. Auch ist die Menge und Zahl der Arten der Mikroorganismen weit größer im Vergleich zu üblichen biologischen Kläranlagen.

Mit Hilfe der vorliegenden Erfindung ist es daher möglich, Abwasserinhaltsstoffe abzubauen, die nach bisheriger Kenntnis in Kläranlagen herkömmlicher Art nur unzureichend abgebaut werden. Nach abgeschlossener Rotte kann der fertige Kompost problemlos im Landschafts- und Gartenbau und in der Landwirtschaft eingesetzt werden.

## Patentansprüche

1. Verfahren zur Entsorgung von Abwasser enthaltend wäßrige oder wasserhaltige Lösungen, Dispersionen oder Emulsionen kompostierfähiger Abfallstoffe durch
a) Überleiten des Abwassers über Oberflächen fester Stoffe, die sich im Freien befinden und Einblasen von Luft im Gegenstromprinzip unter Erhöhung der Viskosität bis zur Grenze der Fließfähigkeit,
b) Aufbringen des viskosen Abwassers auf ein saugfähiges, kompostierfähiges Substrat und anschließendes
c) Kompostieren des Substrats und der Abfallstoffe.

2. Verfahren nach Anspruch 1, dadurch gekennzeichnet, daß das Abwasser Desinfektionsmittel, Phenolderivate, Farbstoffe, Gerbstoffe und Gerberei-Hilfsstoffe, Rückstände aus der Produktion von Kosmetika, Bauhilfsstoffen usw. enthält.

3. Verfahren nach Anspruch 1 oder 2, dadurch gekennzeichnet, daß die Oberflächen durch Füllkörper in Füllkörperkolonnen realisiert werden.

4. Verfahren nach Anspruch 3, dadurch gekennzeichnet, daß man Füllkörper in der Kolonne aus Quarz, Sand, Kohle, Aktivkohle, Steinbrocken, Glasscherben, Aluminiumoxiden, Raschig-Ringen, Drahtspiralen, Maschendrahtringen und/oder Gitterfüllkörpern einsetzt.

5. Verfahren nach Ansprüchen 1 bis 4, dadurch gekennzeichnet, daß man vorerwärmte Luft, insbesondere Abluft einbläst.

6. Verfahren nach einem oder mehreren der Ansprüche 1 bis 4, dadurch gekennzeichnet, daß man das Abwasser mehrfach über die Oberflächen leitet.

7. Verfahren nach einem oder mehreren der Ansprüche 1 bis 6, dadurch gekennzeichnet, daß man das Abwasser einer kontinuierlichen Viskositätserhöhung zuführt.

8. Verfahren nach einem oder mehreren der Ansprüche 1 bis 7, dadurch gekennzeichnet, daß man das verdunstende Wasser vor dem Einbringen in die Umwelt über ein kompostierbares Substrat leitet.

9. Verfahren nach einem oder mehreren der Ansprüche 1 bis 8, dadurch gekennzeichnet, daß man als kompostierfähiges Substrat Aktivkohle, Holzschnitzel, Rindenschnitzel, Häcksel, Stroh und/oder Grünabfälle einsetzt.
